# EUROPÄISCHE PATENTANMELDUNG

(11) **EP 1 701 298 A2**
(43) Veröffentlichungstag der Anmeldung: **13.09.2006**
(21) Anmeldenummer: 06002335.5
(22) Anmeldetag: 06.02.2006
(51) Int. Cl.: G06K 19/077, G06K 19/02

(54) **Textilinformationsträger und Verfahren zur Herstellung eines Textilinformationsträgers**

(30) Priorität: 07.03.2005 DE 102005010841
(71) Anmelder: ASTRA Gesellschaft für Asset Management mbH & Co. KG, 30890 Barsinghausen (DE)
(72) Erfinder: Stobbe, Anatoli, 30890 Barsinghausen (DE)
(74) Vertreter: Körner, Peter

(57) **Zusammenfassung**

Es wird ein Textilinformationsträger, bestehend aus einem Textiletikett oder einer Textilware und einem mit dem Textiletikett oder der Textilware verbundenen textilen Detektierplättchen aus einem textilen Träger beschrieben. In oder auf dem textilen Träger sind eine textile Antenne sowie ein mit der textilen Antenne verbundenes elektronisches Chipmodul angeordnet.

## Beschreibung

Die Erfindung betrifft einen Textilinformationsträger und ein Verfahren zur Herstellung eines Textilinformationsträgers.

Textilware wird üblicherweise vom Hersteller, Konfektionierer Vertreiber oder Designer mit Textiletiketten versehen, die optisch lesbare Hinweise auf die Zusammensetzung der Ware, Anleitung für die Pflege und Reinigung sowie Angaben zur Konfektionsgröße, Herkunft, Handelsmarke oder Handelsname sowie den Designer enthalten.

Besonders bei hochwertiger Textilware werden zur Kennzeichnung Designeretiketten, so genannte Jacquard-Etiketten, oder mit dem Produzentenschriftzug oder der Marke bedruckte Etiketten, so genannte Satin-Etiketten verwendet, die in aufwendigen Verfahren hergestellt werden, um Nachbildungen zu erschweren.

Um Nachbildungen oder Falschetikettierungen besser erkennen zu können oder auch zur Identifikation von Textilwaren bei der Herstellung, Verarbeitung, beim Transport, bei der Lagerhaltung, beim Vertrieb und bei der Pflege und Reinigung werden zunehmend elektronische Datenträger eingesetzt, die redundante oder zusätzliche Informationen zum optisch lesbaren Textiletikett enthalten und nur über ein spezielles Lesegerät gelesen werden können. Der Vorteil von auf elektronischen Datenträgern gespeicherten Informationen besteht darin, dass sie weitgehend manipulationssicher und unempfindlich gegen Verschmutzung und Reinigungsmittel sind und auch ohne optische Sicht gelesen werden können.

Der Erfindung liegt die Aufgabe zugrunde, einen Textilinformationsträger zu schaffen, der die Informationen eines elektronischen Datenträgers mit Informationen eines Textiletiketts, wie Jacquard-Etiketten oder Satin-Etiketten, oder einer Textilware, wie Innentasche oder Innenfutter eines Kleidungsstücks verknüpft und die textilen Eigenschaften des Textiletiketts oder der Textilware wahrt.

Diese Aufgabe wird mit den Merkmalen des Anspruchs 1 gelöst.

Weiterbildungen und vorteilhafte Ausgestaltungen ergeben sich aus den Unteransprüchen.

Bei dem erfindungsgemäßen Textilinformationsträger werden das Textiletikett oder die Textilware, z. B. die Veston-Innentasche oder das Innenfutter eines Kleidungsstückes, einerseits und das textile Detektierplättchen andererseits zunächst gesondert hergestellt und anschließend verbunden. Ein textiles Detektierplättchen bezeichnet einen textilen Träger mit einer textilen Antenne und einem elektronischen Chipmodul.

Dadurch kann der Aufbau und die Gestaltung des Textiletiketts oder der Textilware sowie dessen Herstellungsverfahren unverändert beibehalten werden. Das ist besonders bei Designetiketten für hochwertige Textilware vorteilhaft, die bisher in einem aufwendigen rechnergesteuerten Nadelwebverfahren in einem fortlaufenden Streifen gewebt und anschließend geschnitten werden.

Das textile Detektierplättchen aus dem textilen Träger mit der textilen Antenne und dem Chipmodul kann unabhängig vom Textiletikett oder der Textilware standardisiert gefertigt werden und ist für eine Verbindung mit unterschiedlichen Textiletiketten oder Textilwaren geeignet. Bis auf das elektronische Chipmodul selbst und elektrisch leitfähige Bestandteile der textilen Antenne, die aber trotzdem textile Eigenschaften aufweisen, sind alle übrigen Bestandteile des Textilinformationsträgers aus textilem Material, so dass die textile Eigenschaft, insbesondere die Flexibilität, gewahrt bleibt.

Vorzugsweise ist das textile Detektierplättchen mit seiner das elektronische Chipmodul tragenden Innenseite mit dem Textiletikett oder der Textilware reversibel lösbar oder irreversibel unlösbar verbunden.

Dadurch ist das elektronische Chipmodul nicht sichtbar und gegen mechanische Beschädigung geschützt. Bei reversibel lösbaren textilen Detektierplättchen kann das textile Detektierplättchen z. B. nach einem Fertigungs- oder Transportvorgang entfernt werden, wenn die Informationen anschließend nicht mehr benötigt werden oder nicht durch Unbefugte verwendet werden sollen.

Bei irreversibel unlösbar verbunden textilen Detektierplättchen sollen die Informationen dauerhaft mit dem Textiletikett oder der Textilware verknüpft bleiben. Dadurch sind Manipulationen erschwert und ohne Zerstörung des Verbundes aus Textiletikett oder Textilware einerseits und textilem Detektierplättchen andererseits nicht möglich.

Das textile Detektierplättchen kann mit dem Textiletikett oder der Textilware durch Verschweißung oder Bondierung oder Kaschierung oder Laminierung oder Klebung oder mittels einer Klebefolie oder mittels einer unter Wärme und Druck hergestellten Patch-Verbindung verbunden sein.

Das textile Detektierplättchen wird mit dem Textiletikett oder Textilware unmittelbar durch Verschmelzen von Fasern oder Filamenten oder mittelbar durch einen adhäsiven Werkstoff verbunden. Die textilen Eigenschaften der verbundenen Lagen aus dem textilen Detektierplättchen und dem Textiletikett oder der Textilware bleiben so erhalten.

Vorzugsweise besteht die Verbindung aus diskreten Verbindungspunkten oder sehr feiner, perforierter Klebefolie.

Durch die Beschränkung auf diskrete Verbindungspunkte oder eine sehr feine, das heißt dünne und flexible, perforierte Klebefolie wird eine Versteifung der verbundenen Lagen aus dem textilen Detektierplättchen und dem Textiletikett oder der Textilware vermieden.

Weiterhin kann die Verbindung aus selbstklebendem Stickgarn bestehen, das auf den textilen Träger des textilen Detektierplättchens aufgestickt ist.

Durch das aufgestickte selbstklebende Stickgarn ergibt sich ein Gitter, das ebenfalls diskrete Verbindungspunkte oder auch diskrete Verbindungslinien darbietet, und so aufgrund der nicht vollflächigen Verbindung eine Versteifung der verbundenen Lagen aus dem textilen Detektierplättchen und dem Textiletikett oder der Textilware vermeidet.

Alternativ kann das textile Detektierplättchen mit dem Textiletikett oder der Textilware durch eine Näh- oder Stickverbindung verbunden sein.

Bei der textilen Struktur dieser Verbindung wird ebenfalls eine Versteifung der verbundenen Lagen aus dem textilen Detektierplättchen und dem Textiletikett oder der Textilware vermieden.

Die Antenne kann in einem gemeinsamen textilen Herstellungsprozess des textilen Trägers eingewebt sein.

Die Herstellung des textilen Trägers kann zusammen mit der Herstellung der textilen Antenne in einem Arbeitsgang erfolgen. Die Antenne ist dadurch direkt in den textilen Träger des textilen Detektierplättchens integriert.

Alternativ kann die Antenne in einem gesonderten textilen Herstellungsprozess auf das textile Detektierplättchen gestickt sein.

Bei der Stickereiausführung besteht eine größere Freiheit in der geometrisch konstruktiven Gestaltung der Antenne. Während beim Weben die Antenne nur in Fertigungsrichtung oder quer dazu eingewebt werden kann, ermöglicht das Sticken eine Anordnung der Antenne in beliebigen Richtungen und Richtungsänderungen.

Der textile Träger kann vor dem Stickvorgang mit der Klebefolie verbunden sein.

Da der textile Träger als Stickboden noch ungeschnitten und damit im Vergleich zu den Abmessungen der textilen Detektierplättchen in größeren Abmessungen vorliegt, ist die vorangehende Verbindung mit einer Klebefolie wirtschaftlicher und ohne Beeinträchtigung der später gestickten Antennenstruktur möglich.

Vorzugsweise besteht die gewebte Antenne aus einem Hybridgarn aus wenigstens einer Kunst- und/oder Naturfaser oder aus Kunst- und/oder Naturmultifasern und/oder aus wenigstens einem Kunst- und/oder Naturfilament oder aus Kunst- und/oder Naturmultifilamenten und aus wenigstens einem elektrisch leitfähigen Filament.

Ein solches Hybridgarn weist im Vergleich zu einem aus ausschließlich elektrisch leitfähigen Filamenten bestehenden Garn eine höhere Reißfestigkeit auf. Dadurch ist eine Verarbeitung auf üblichen industriellen Textilmaschinen möglich.

Die gestickte Antenne umfasst vorzugsweise einen Oberfaden und einen Unterfaden, von denen einer der Fäden aus einem Hybridgarn aus wenigstens einer Kunst- und/oder Naturfaser oder aus Kunst- und/oder Naturmultifasern oder aus wenigstens einem Kunst- und/oder Naturfilament oder aus Kunst- und/oder Naturmultifilamenten und aus wenigstens einem elektrisch leitfähigen Filament besteht und der andere Faden aus einem Garn aus wenigstens einer Kunst- und/oder Naturfaser oder aus Kunst- und/oder Naturmultifasern oder aus wenigstens einem Kunst- und/oder Naturfilament oder aus Kunst- und/oder Naturmultifilamenten besteht.

Die textilen Eigenschaften von Ober- und Unterfaden sind dadurch aneinander angeglichen, so dass hier ebenfalls eine Verarbeitung auf üblichen industriellen Textilmaschinen möglich ist.

Die wenigstens eine Kunst- und/oder Naturfaser oder die Kunst- und/oder Naturmultifasern oder das wenigstens eine Kunst- und/oder Naturfilament oder die Kunst- und/oder Naturmultifilamente können mit dem wenigstens einen elektrisch leitfähigen Filament verdrillt oder verzwirnt oder verwirbelt/texturiert und dann verzwirnt sein.

Hierdurch wird die Reißfestigkeit des elektrisch leitfähigen Filaments verbessert. Da im Falle einer Expansion und anschließenden Kontraktion des Hybridgarns das elektrisch leitfähige Filament eine bleibende Dehnung erfährt, kann sich die Überlänge des elektrisch leitfähigen Filaments gleichmäßig um die Kunst- und/oder Naturfaser oder die Kunst- und/oder Naturmultifasern oder das Kunst- und/oder Naturfilament oder die Kunst- und/oder Naturmultifilamente herum verteilen.

Vorzugsweise bilden die Kunstfasern oder Kunstmultifasern oder Kunstfilamente oder Kunstmultifilamente ein Polyamid-oder Polyestertexturgarn.

Dieses Material ist besonders reißfest und gut auf industriellen Textilmaschinen verarbeitbar.

Vorzugsweise sind die elektrisch leitfähigen Filamente Kupfer- oder Messing- oder Aluminiummonofilamente oder -multifilamente.

Hierdurch wird eine gute elektrische Leitfähigkeit erzielt. Außerdem ist das Material bei geringer Federelastizität biegsam und damit in Verbindung mit Natur- oder Kunstfasern oder -filamenten gut auf industriellen Textilmaschinen verarbeitbar.

Die elektrisch leitfähigen Filamente können auch Polyamid-oder Polyestermonofilamente oder -multifilamente mit bedampfter oder elektrolytisch beschichteter Metalloberfläche sein, wie sie z. B. unter dem Handelsnamen X-Static vertrieben werden.

Die textilen Eigenschaften und die Verarbeitbarkeit auf industriellen Textilmaschinen dieser elektrisch leitfähigen Filamente entsprechen nahezu denjenigen der unbeschichteten Filamente oder Multifilamente.

Die elektrisch leitfähigen Filamente können auch Karbongarne sein, wie sie z. B. unter dem Handelsnamen Beltron vertrieben werden.

Karbongarne zeichnen sich durch eine große Elastizität und Reißfestigkeit aus und sind gegen chemische Einflüsse, z. B. bei chemischer Reinigung, resistent.

Die elektrisch leitfähigen Filamente können auch geschnittene Aluminium- oder Aluminium-Kunststoffverbundfolien sein, wie sie z. B. unter dem Handelsnamen Lurex vertrieben werden.

Diese elektrisch leitfähigen Filamente sind besonders kostengünstig und flexibel.

Die elektrisch leitfähigen Filamente können auch Metallschnittfasern sein, die im Garngespinst angeordnet sind.

Bei dieser Ausführung der elektrisch leitfähigen Filamente sind kurze Metallschnittfasern integral im Garngespinst angeordnet, wodurch diese Filamente elastisch dehnbar ohne bleibende Dehnung der Metallschnittfasern sind. Diese Eigenschaft erleichtert die Verarbeitung auf industriellen Textilmaschinen mit hoher Fertigungsgeschwindigkeit.

Die Antenne kann als Halbwellendipol ausgebildet sein.

Dadurch sind eine Anpassung an die Ausgangsimpedanz des elektronischen Detektierplättchens und ein guter Antennenwirkungsgrad gewährleistet.

Die Antenne kann auch als verkürzter Dipol mit Verlängerungsspulen ausgebildet sein.

Diese Ausführung ermöglicht es, die Antenne auf einem textilen Detektierplättchen anzuordnen, der in seinen Abmessungen kleiner als die halbe Wellenlänge der Arbeitsfrequenz des elektronischen Detektierplättchens ist.

Die Antenne kann als Viertelwellengroundplane aus einem Strahler und einem Gegengewicht ausgebildet sein.

Bei dieser Ausführung sind ebenfalls eine Anpassung an die Ausgangsimpedanz des elektronischen Detektierplättchens und ein guter Antennenwirkungsgrad gewährleistet. Außerdem erfordert diese Ausführung nur einen Platzbedarf auf dem textilen Detektierplättchen, der etwas über einer Viertelwellenlänge der Arbeitsfrequenz des elektronischen Detektierplättchens liegt.

Die Antenne kann als verkürzte Groundplane aus einem verkürzten Strahler mit einer Verlängerungsspule und einem Gegengewicht ausgebildet sein.

Diese Ausführung ist für einen textilen Detektierplättchen geeignet, der in seinen Abmessungen kleiner als die viertel Wellenlänge der Arbeitsfrequenz des elektronischen Detektierplättchens ist. Im vergleich zu einem verkürzten Dipol ist der Platzbedarf nochmals etwa um die Hälfte geringer.

Die Antenne kann als magnetische Schleife ausgebildet sein.

Bei einer magnetischen Schleife, die im Vergleich zu einem Halbwellendipol oder einer Viertelwellengroundplane nochmals in den Abmessungen kleiner ist, überwiegt im Nahfeld die magnetische Komponente des elektromagnetischen Feldes. Dämpfende Einflüsse durch elektrisch leitfähige Materialien in der Nähe der Antenne wirken sich daher weniger stark auf die Feldausbreitung aus.

Die Anschlüsse der Antenne können mit Anschlüssen des Chipmoduls durch eine Klebeverbindung aus einer elektrisch leitfähigen, ofen- oder UV-härbaren Klebepaste verbunden sein.

Diese Ausführung ermöglicht eine zuverlässige Verbindung zwischen den Anschlüssen bei gleichzeitiger Schonung der textilen Struktur. Die Ausführung eignet sich sowohl für eine manuelle Fertigung bei kleinen Stückzahlen als auch für eine maschinelle Fertigung bei großen Stückzahlen.

Die Anschlüsse der Antenne können mit Anschlüssen des Chipmoduls auch durch eine Klebeverbindung aus einem elektrisch leitfähigen, warm und in schmelzflüssiger Form aufbringbaren und bei Umgebungstemperatur aushärtbaren Schmelzkleber verbunden sein.

Alternativ können die Anschlüsse der Antenne mit Anschlüssen des Chipmoduls durch eine Klebeverbindung aus einem elektrisch leitfähigen, auf dem textile Träger oder Anschlüssen des Chipmoduls vorhanden Schmelzkleber verbunden sein, der durch vorübergehende Erwärmung aktivierbar und anschließend bei Umgebungstemperatur aushärtbar ist.

Auch diese Ausführung ermöglicht eine zuverlässige Verbindung zwischen den Anschlüssen bei gleichzeitiger Schonung der textilen Struktur. Die Ausführung eignet sich besonders für eine schnelle manuelle Fertigung bei kleinen Stückzahlen, ist aber auch für eine maschinelle Fertigung bei großen Stückzahlen geeignet.

Die Anschlüsse der Antenne können mit Anschlüssen des Chipmoduls auch durch eine Klebeverbindung aus einem elektrisch leitfähigen Klebefilm oder einer elektrisch leitfähigen Klebefolie verbunden sein, wobei der Klebefilm oder die Klebefolie auf den Anschlüssen des Chipmoduls angeordnet und beim Klebevorgang durch Druck und Wärme aktivierbar ist.

Auch diese Ausführung eignet sich für eine schnelle manuelle und industrielle Fertigung, da zur Herstellung der Verbindung die Anschlüsse lediglich kurzzeitig mit Druck und Wärme in Kontakt gebracht werden müssen und weitere Arbeitsschritte entfallen.

Die Anschlüsse der Antenne können mit Anschlüssen des Chipmoduls durch eine Schweißverbindung verbunden sein.

Bei dieser Ausführung wird ein optimaler Kontakt zwischen den Anschlüssen in einem Arbeitsgang erzielt. Der apparative Aufwand ist aber im Vergleich zu einer Klebeverbindung höher.

Die Anschlüsse der Antenne mit Anschlüssen des Chipmoduls durch eine Crimpverbindung verbunden sind.

Diese rein mechanische Verbindung eignet sich sowohl für eine manuelle Fertigung bei kleinen Stückzahlen als auch für eine maschinelle Fertigung bei großen Stückzahlen. Aufgrund einer Anfälligkeit gegen Korrosion ist allerdings die Zuverlässigkeit im Vergleich zu den anderen genannten Verbindungen etwas geringer.

Das Chipmodul kann durch Stickgarn am textilen Träger fixiert sein.

Hierdurch ist bereits während des Bestickens des textilen Trägers zur Herstellung der textilen Antenne zusätzlich eine Bestückung des textilen Träger mit dem Chipmodul und dessen Fixierung möglich. Wenn dabei das Stickgarn mit einem elektrisch leitfähigen Filament der textilen Antenne genutzt wird, ergibt sich bereits ein elektrischer Kontakt zwischen den Anschlüssen der textilen Antenne und den Anschlüssen des Chipmoduls.

Das Stickgarn kann Anschlussfahnen des Chipmoduls umschlingen.

Dadurch lassen sich marktübliche Chipmodule ohne Änderung durch Stickgarn fixieren und auch kontaktieren.

Alternativ kann das Stickgarn Bohrungen in Anschlussfahnen des Chipmoduls durchgreifen.

Durch diese Ausgestaltung lässt sich das Chipmodul formschlüssig fixieren und auch kontaktieren.

Das Chipmodul und die Anschlüsse des Chipmoduls mit der Antenne können durch eine Schutzmasse als Globtop vergossen sein.

Dadurch sind das Chipmodul und die Anschlüsse des Chipmoduls mit der Antenne auf dem textilen Träger fixiert und gegen mechanische und chemische Einflüsse, wie beim Gebrauch der Textilware und Reinigung auftreten geschützt. Als Schutzmasse ist z. B. Silikon geeignet.

Vorzugsweise weist das textile Detektierplättchen bei unterschiedlichen Größen des Textiletiketts oder der Textilware konstante Abmessungen auf, die wenigstens nach der kleinsten technisch noch realisierbaren Größe des textilen Detektierplättchens bemessen sind.

Durch konstante Abmessungen des textilen Trägers kann dieser mit der Antenne und dem elektronischen Chipmodul in standardisierter Form hergestellt und mit Textiletiketten oder Textilware gleicher oder beliebig größerer Abmessungen zu einem Textilinformationsträger verbunden werden. Dadurch ergibt sich ein erheblicher Kostenvorteil bei der Fertigung. Die kleinste technisch noch realisierbare Größe des textilen Detektierplättchens ist durch die Arbeitsfrequenz des elektronischen Chipmoduls und die geometrischen Abmessungen der textilen Antenne vorgegeben, bei der noch eine ausreichende Lesereichweite gewährleistet ist.

Das textile Detektierplättchen kann bei unterschiedlichen Größen des Textiletiketts oder der Textilware einheitliche elektrische und elektronische Eigenschaften aufweisen.

Außerdem kann das textile Detektierplättchen bei unterschiedlichen Größen des Textiletiketts oder der Textilware die gleiche Lesereichweite aufweisen.

Durch diese Art der Standardisierung wird sichergestellt, dass Vorrichtungen mit Lesegeräten zur Identifikation von Textiletiketten und Textilwaren bei der Herstellung, Verarbeitung, beim Transport, bei der Lagerhaltung, beim Vertrieb und bei der Pflege und Reinigung nach einheitlichen Richtlinien und Parametern anhand von Referenz-Detektierplätten eingerichtet werden können. Im späteren Betrieb ist dann eine zuverlässige und Identifikation der genutzten realen Textilinformationsträger gewährleistet.

Weiterhin liegt der Erfindung die Aufgabe zugrunde, ein Verfahren zur Herstellung eines Textilinformationsträgers zu schaffen, mit dem die Informationen eines elektronischen Datenträgers mit Informationen eines Textiletiketts, wie Jacquard-Etiketten oder Satin-Etiketten, oder einer Textilware, wie Innentasche oder Innenfutter eines Kleidungsstücks verknüpft und die textilen Eigenschaften des Textiletiketts oder der Textilware gewahrt werden.

Diese Aufgabe wird mit den Merkmalen des Anspruchs 37 gelöst.

Weiterbildungen und vorteilhafte Ausgestaltungen ergeben sich aus den Unteransprüchen.

Das textile Detektierplättchen aus dem textilen Träger mit der textilen Antenne und dem Chipmodul kann unabhängig vom Textiletikett oder der Textilware standardisiert gefertigt werden und ist für eine Verbindung mit unterschiedlichen Textiletiketten oder Textilwaren geeignet. Bis auf das elektronische Chipmodul selbst und elektrisch leitfähige Bestandteile der textilen Antenne, die aber trotzdem textile Eigenschaften aufweisen, sind alle übrigen Bestandteile des Textilinformationsträgers aus textilem Material, so dass die textile Eigenschaft, insbesondere die Flexibilität, gewahrt bleibt.

Das textile Detektierplättchen wird vorzugsweise aus einem textilen Träger hergestellt, auf den textilen Träger wird eine Antenne aufgestickt, anschließend wird ein Chipmodul mit seinen Anschlüssen über Anschlüssen der Antenne positioniert und dann werden die Anschlüsse des Chipmoduls mit den Anschlüssen der Antenne elektrisch leitend verbunden.

Bei der Stickereiausführung besteht eine größere Freiheit in der geometrisch konstruktiven Gestaltung der Antenne. Während beim Weben die Antenne nur in Fertigungsrichtung oder quer dazu eingewebt werden kann, ermöglicht das Sticken eine Anordnung der Antenne in beliebigen Richtungen und Richtungsänderungen. Die Herstellung der Antenne kann dabei auf konventionellen industriellen Stickmäschinen und damit sehr wirtschaftlich durchgeführt werden.

Gemäß einer Weiterbildung kann dass das textile Detektierplättchen aus einem textilen Träger hergestellt werden, auf den textilen Träger eine Antenne aufgestickt und dabei ein Chipmodul über Anschlüssen der Antenne positioniert und durch Stickgarn fixiert werden. Gleichzeitig mit der Fixierung oder anschließend können die Anschlüsse des Chipmoduls mit den Anschlüssen der Antenne elektrisch leitend verbunden werden.

Dadurch lässt sich komplette textile Detektierplättchen auf einer leicht modifizierten industriellen Stickmaschine vollständig fertigen.

Weiterhin können Textiletiketten oder Textilware unterschiedlicher Größe mit textilen Detektierplättchen konstanter Abmessungen verbunden werden, wobei die Abmessungen nach der kleinsten technisch noch realisierbaren Größe des textilen Detektierplättchens bemessen sind.

Durch konstante Abmessungen des textilen Trägers kann dieser mit der Antenne und dem elektronischen Chipmodul in standardisierter Form hergestellt und mit Textiletiketten oder Textilware gleicher oder beliebig größerer Abmessungen zu einem Textilinformationsträger verbunden werden. Dadurch ergibt sich ein erheblicher Kostenvorteil bei der Fertigung.

Nachfolgend wird die Erfindung anhand eines Ausführungsbeispiels erläutert, das in der Zeichnung dargestellt ist.

### In der Zeichnung zeigen:

Fig. 1 einen mit gestickten Antennenstrukturen versehenen Stickboden,
Fig. 2 eine schematische Darstellung eines Bestückungsprozesses mit bandförmigen textilen Trägern,
Fig. 3 eine schematische Darstellung eines Bestückungsprozesses mit vereinzelten textilen Trägern,
Fig. 4 eine schematische Darstellung eines Endfertigungsprozesses,
Fig. 5 einen Schnitt durch einen Textilinformationsträger.

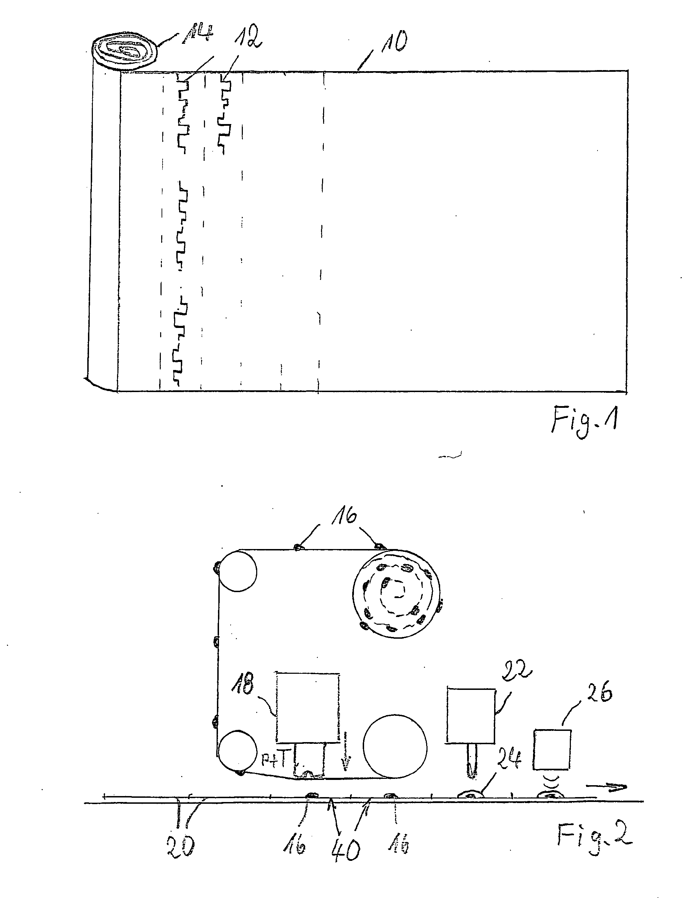

Fig.1 zeigt einen Stickboden 10, auch als Stickbahn bezeichnet, mit gestickten Strukturen textiler Antennen 12. Die Fertigung erfolgt auf einer in der Textilindustrie üblichen Stickmaschine. Dazu wird ein Abschnitt des Stickbodens 10 von einer Rolle 14 als Rohmaterial in einem Stickrahmen der Stickmaschine über die Höhe und Breite des Stickrahmens fixiert und die Strukturen textiler Antennen 12 im gewählten Rapport gleichzeitig über die gesamte Breite des Stickrahmens der Stickmaschine gestickt. Der auf der Rolle 14 befindliche Stickboden 10 kann bereits mit einer Klebefolie versehen sein.

Danach wird der Stickvorgang zeilenweise über die Höhe des Stickbodens wiederholt. Der bestickte Abschnitt des Stickbodens 10 wird anschließend von der Rolle 14 abgeschnitten und einer neuer Abschnitt von der Rolle 14 in den Stickrahmen eingespannt und in gleicher Weise bestickt. Die einzelnen textilen Detektierplättchen mit den Antennenstrukturen 12 können vor oder nach der Bestückung mit dem elektronischen Chipmodul geschnitten oder gestanzt werden.

Durch Modifizierung einer konventionellen Stickmaschine können auch Chipmodule zugeführt und mit dem Stickgarn fixiert werden. Im gleichen Arbeitsgang können auch Anschlüsse der Chipmodule mit Anschlüssen der textilen Antenne elektrisch vorläufig und dauerhaft verbunden werden.

Fig. 2 zeigt eine schematische Darstellung eines Bestückungsprozesses mit bandförmigen zusammenhängenden textilen Trägern 20 für den Fall, dass die Chipmodule 16 nicht bereits während der Bestickung bestückt und kontaktiert wurden, sondern dies in einem gesonderten Bestückungsprozess erfolgt. Chipmodule 16 werden mit einer Bestückungsvorrichtung 18 an der vorgesehenen Kontaktstelle über den Anschlüssen der textilen Antenne positioniert und anschließend auf den textilen Träger 20 aufgesetzt. Danach erfolgen die Verbindung des elektronischen Chipmoduls 16 mit dem textilen Träger 20 und die Verbindung der Anschlüsse des elektronischen Chipmoduls 16 mit den Anschlüssen der Antenne durch Druck p und Wärme T. Auch eine ausschließliche Verbindung der Anschlüsse des elektronischen Chipmoduls 16 mit den Anschlüssen der Antenne und mechanische Fixierung über die Antenne ist möglich. Danach wird über das Chipmodul 16 und die Anschlüsse zwischen dem Chipmodul 16 und der Antenne mittels einer Spritzvorrichtung 22 noch eine Schutzmasse 24 aufgebracht.

Ist der Stickboden noch nicht mit einer Klebefolie versehen gewesen, so kann gleichzeitig mit dem Bestückungsprozesses auch eine Klebfolie zugeführt und mit dem textilen Träger 20 verbunden werden. Anschließend werden die zusammenhängenden textilen Detektierplättchen 40 auf den endgültigen Zuschnitt in einzelne textile Detektierplättchen 40 geschnitten oder gestanzt. Schließlich wird noch eine Funktionsprüfung der fertigen textilen Detektierplättchen 40 mit den elektronischen Chipmodulen 16 mittels eines Lesegerätes 26 durchgeführt.

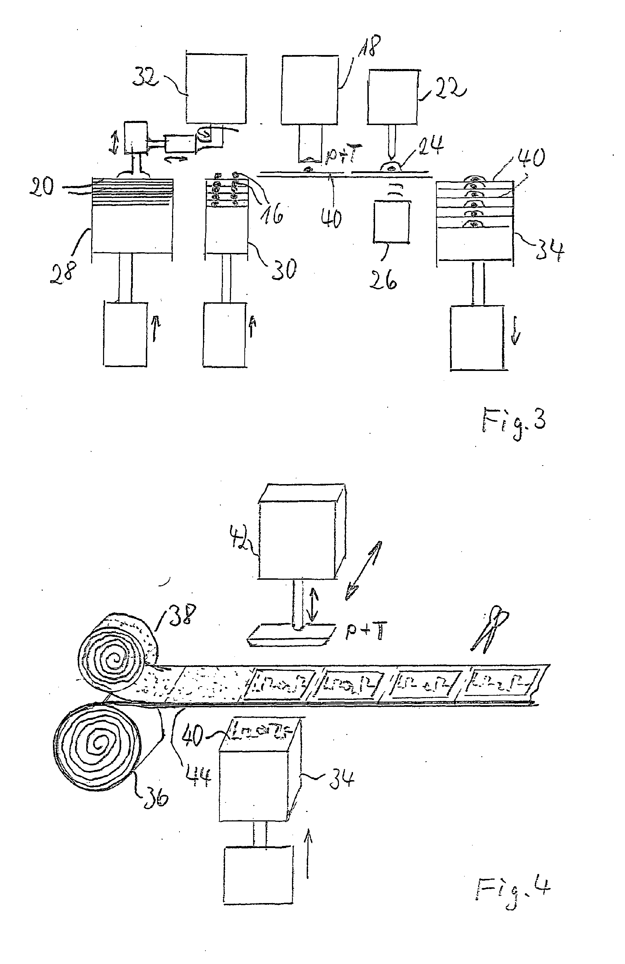

Fig. 3 zeigt eine schematische Darstellung eines Bestückungsprozesses mit vereinzelten textilen Trägern 20, die jeweils bereits auf die endgültigen Abmessungen zugeschnitten sind. Die textilen Träger 20 befinden sich in einem Speicher 28. Außerdem befinden sich Chipmodule 16 in einem Speicher 30. Einer Bestückungsvorrichtung 18 werden mittels einer Zuführungsvorrichtung 32 einzeln nacheinander jeweils ein textiler Träger 20 und ein Chipmodul 16 zugeführt, der textile Träger 20 mit einem Chipmodul 16 bestückt und dabei eine Verbindung zwischen den Anschlüssen des Chipmoduls 16 und den Anschlüssen der textilen Antenne durch Druck p und Wärme T hergestellt. Danach wird über das Chipmodul 16 und die Anschlüsse zwischen dem Chipmodul 16 und der Antenne mittels einer Spritzvorrichtung 22 noch eine Schutzmasse 24 aufgebracht. Die fertigen textilen Detektierplättchen 40 gelangen schließlich in einen Speicher 34.

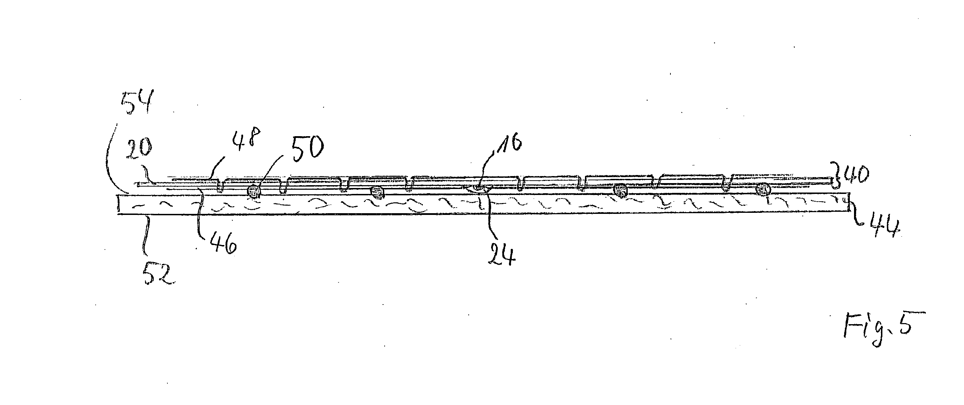

Fig. 4 zeigt eine schematische Darstellung eines Endfertigungsprozesses. Einer Bahn aus Textiletiketten 44, wie z. B. Jacquard-Etiketten oder Satin-Etiketten auf einer Rolle 36 werden von einer Rolle 38 feine perforierte Klebefolie und anschließend aus einem Speicher 34 textile Detektierplättchen 40 mit Chipmodulen und Antennen zugeführt. Die textilen Detektierplättchen 40 über die feine perforierte Klebefolie unter Druck p und Wärme T mit den Rückseiten der Textiletiketten 44 zu Textilinformationsträgern verbunden. Anschließend werden die noch zusammenhängenden Textilinformationsträger durch Trennschnitte der Bahn vereinzelt.

Fig. 5 zeigt einen Schnitt durch einen Textilinformationsträger. Dieses besteht aus einem Textiletikett 44, mit einer Vorderseite 52, die optisch sichtbare Informationen trägt, und einer Rückseite 54, die später im eingenähten Zustand zur Textilware weist. Mit der Rückseite 54 des Textiletiketts 44 ist ein textiles Detektierplättchen 40 verbunden. Das textile Detektierplättchen 40 umfasst einen textilen Träger 20, ein elektronisches Chipmodul 16 mit einer Schutzmasse 24 und eine gestickte Antenne aus einem Hybridgarn 46 und einem Garn 48. Die gestickte Antenne ist auf der Vorderseite des textilen Detektierplättchen 40 so positioniert, dass das Hybridgarn 46 aus z. B. Polyestertexturmultifilamenten und Kupfermonofilamenten gegen die Rückseite 54 des Textiletiketts 44 zu liegen kommt. Dadurch ist textile Antenne und das Chipmodul 16 im Inneren der Konstruktion maximal geschützt.

Der Teil der gestickten textilen Antenne auf der Rückseite des textilen Detektierplättchen 40 besteht nur aus einem Garn 48 aus Polyestertexturfilamenten oder einem normalen Stickgarn. Die Verbindung zwischen dem Textiletikett 44 und dem textilen Detektierplättchen 40 erfolgt durch Klebepunkte 50 oder eine feine perforierte Klebefolie.

## Patentansprüche

1. Textilinformationsträger, bestehend aus einem Textiletikett oder einer Textilware und einem mit dem Textiletikett oder der Textilware verbundenen textilen Detektierplättchen aus einem textilen Träger, in oder auf dem eine textile Antenne sowie ein mit der textilen Antenne verbundenes elektronisches Chipmodul angeordnet sind.

2. Textilinformationsträger nach Anspruch 1, **dadurch gekennzeichnet, dass** das textile Detektierplättchen mit seiner das elektronische Chipmodul tragenden Innenseite mit dem Textiletikett oder der Textilware reversibel lösbar oder irreversibel unlösbar verbunden ist.

3. Textilinformationsträger nach Anspruch 1 oder 2, **dadurch gekennzeichnet, dass** das textile Detektierplättchen mit dem Textiletikett oder der Textilware durch Schweißung oder Bondierung oder Kaschierung oder Laminierung oder Klebung oder mittels einer Klebefolie oder mittels einer unter Wärme und Druck hergestellten Patch-Verbindung verbunden ist.

4. Textilinformationsträger nach Anspruche 3, **dadurch gekennzeichnet, dass** die Verbindung aus diskreten Verbindungspunkten oder sehr feiner, perforierter Klebefolie besteht.

5. Textilinformationsträger nach Anspruche 3, **dadurch gekennzeichnet, dass** die Verbindung aus selbstklebendem Stickgarn besteht, das auf den textilen Träger des textilen Detektierplättchens aufgestickt ist.

6. Textilinformationsträger nach Anspruch 1 oder 2, **dadurch gekennzeichnet, dass** das textile Detektierplättchen mit dem Textiletikett oder der Textilware durch eine Näh- oder Stickverbindung verbunden ist.

7. Textilinformationsträger nach einem der Ansprüche 1 bis 6, **dadurch gekennzeichnet, dass** die Antenne in einem gemeinsamen textilen Herstellungsprozess des textilen Trägers eingewebt ist.

8. Textilinformationsträger nach einem der Ansprüche 1 bis 6, **dadurch gekennzeichnet, dass** die Antenne in einem gesonderten textilen Herstellungsprozess auf den textilen Träger gestickt ist.

9. Textilinformationsträger nach Anspruche 3 und 8, **dadurch gekennzeichnet, dass** der textile Träger vor dem Stickvorgang mit der Klebefolie verbunden ist.

10. Textilinformationsträger nach Anspruch 7, **dadurch gekennzeichnet, dass** die gewebte Antenne aus einem Hybridgarn aus wenigstens einer Kunst- und/oder Naturfaser oder aus Kunst- und/oder Naturmultifasern oder aus wenigstens einem Kunst- und/oder Naturfilament oder aus Kunst- und/oder Naturmultifilamenten und aus wenigstens einem elektrisch leitfähigen Filament besteht.

11. Textilinformationsträger nach Anspruch 8 oder 9, **dadurch gekennzeichnet, dass**. die gestickte Antenne einen Oberfaden und einen Unterfaden umfasst, von denen einer der Fäden aus einem Hybridgarn aus wenigstens einer Kunst- und/oder Naturfaser oder aus Kunst- und/oder Naturmultifasern oder aus wenigstens einem Kunst- und/oder Naturfilament oder aus Kunst-und/oder Naturmultifilamenten und aus wenigstens einem elektrisch leitfähigen Filament besteht und der andere Faden aus einem Garn aus wenigstens einer Kunst- und/oder Naturfaser oder aus Kunst- und/oder Naturmultifasern oder aus wenigstens einem Kunst- und/oder Naturfilament oder aus Kunst- und/oder Naturmultifilamenten besteht.

12. Textilinformationsträger nach Anspruch 10 oder 11, **dadurch gekennzeichnet, dass** die wenigstens eine Kunst-und/oder Naturfaser oder die Kunst- und/oder Naturmultifasern oder das wenigstens eine Kunst- und/oder Naturfilament oder die Kunst- und/oder Naturmultifilamente mit dem wenigstens einen elektrisch leitfähigen Filament verdrillt oder verzwirnt oder verwirbelt/texturiert und dann verzwirnt ist.

13. Textilinformationsträger nach einem der Ansprüche 10 bis 12, **dadurch gekennzeichnet, dass** die Kunstfasern oder Kunstmultifasern oder Kunstfilamente oder Kunstmultifilamente ein Polyamid- oder Polyestertexturgarn bilden.

14. Textilinformationsträger nach einem der Ansprüche 10 bis 13, **dadurch gekennzeichnet, dass** die elektrisch leitfähigen Filamente Kupfer- oder Messing- oder Aluminiummonofilamente oder -multifilamente sind.

15. Textilinformationsträger nach einem der Ansprüche 10 bis 13, **dadurch gekennzeichnet, dass** die elektrisch leitfähigen Filamente Polyamid- oder Polyestermonofilamente oder -multi-filamente mit bedampfter oder elektrolytisch beschichteter Metalloberfläche sind.

16. Textilinformationsträger nach einem der Ansprüche 10 bis 13, **dadurch gekennzeichnet, dass** die elektrisch leitfähigen Filamente Karbongarne sind.

17. Textilinformationsträger nach einem der Ansprüche 10 bis 13, **dadurch gekennzeichnet, dass** die elektrisch leitfähigen Filamente geschnittene Aluminium- oder Aluminium-Kunststoffverbundfolien sind.

18. Textilinformationsträger nach einem der Ansprüche 10 bis 13, **dadurch gekennzeichnet, dass** die elektrisch leitfähigen Filamente Metallschnittfasern sind, die im Garngespinst angeordnet sind.

19. Textilinformationsträger nach einem der Ansprüche 1 bis 18, **dadurch gekennzeichnet, dass** die Antenne als Halbwellendipol ausgebildet ist.

20. Textilinformationsträger nach einem der Ansprüche 1 bis 18, **dadurch gekennzeichnet, dass** die Antenne als verkürzter Dipol mit Verlängerungsspulen ausgebildet ist.

21. Textilinformationsträger nach einem der Ansprüche 1 bis 18, **dadurch gekennzeichnet, dass** die Antenne als Viertelwellengroundplane aus einem Strahler und einem Gegengewicht ausgebildet ist.

22. Textilinformationsträger nach einem der Ansprüche 1 bis 18, **dadurch gekennzeichnet, dass** die Antenne als elektrisch verkürzte Groundplane aus einem verkürzten Strahler mit einer Verlängerungsspule und einem Gegengewicht ausgebildet ist.

23. Textilinformationsträger nach einem der Ansprüche 1 bis 18, **dadurch gekennzeichnet, dass** die Antenne als magnetische Schleife ausgebildet ist.

24. Textilinformationsträger nach einem der Ansprüche 1 bis 23, **dadurch gekennzeichnet, dass** Anschlüsse der Antenne mit Anschlüssen des Chipmoduls durch eine Klebeverbindung aus einer elektrisch leitfähigen, ofen- oder UV-härtbaren Klebepaste verbunden sind.

25. Textilinformationsträger nach einem der Ansprüche 1 bis 23, **dadurch gekennzeichnet, dass** Anschlüsse der Antenne mit Anschlüssen des Chipmoduls durch eine Klebeverbindung aus einem elektrisch leitfähigen, warm und in schmelzflüssiger Form aufbringbaren und bei Erwärmung schmelzbaren und Umgebungstemperatur aushärtbaren Schmelzkleber verbunden sind.

26. Textilinformationsträger nach einem der Ansprüche 1 bis 23, **dadurch gekennzeichnet, dass** Anschlüsse der Antenne mit Anschlüssen des Chipmoduls durch eine Klebeverbindung aus einem elektrisch leitfähigen, auf dem textile Träger oder Anschlüssen des Chipmoduls vorhanden Schmelzkleber verbunden sind, der durch vorübergehende Erwärmung aktivierbar und anschließend bei Umgebungstemperatur aushärtbar ist.

27. Textilinformationsträger nach einem der Ansprüche 1 bis 23, **dadurch gekennzeichnet, dass** Anschlüsse der Antenne mit Anschlüssen des Chipmoduls durch eine Klebeverbindung aus einem elektrisch leitfähigen Klebefilm oder einer elektrisch leitfähigen Klebefolie verbunden sind, wobei der Klebefilm oder die Klebefolie auf den Anschlüssen des Chipmoduls ange-ordnet und beim Klebevorgang durch Druck und Wärme aktivierbar ist.

28. Textilinformationsträger nach einem der Ansprüche 1 bis 23, **dadurch gekennzeichnet, dass** Anschlüsse der Antenne mit Anschlüssen des Chipmoduls durch eine Schweißverbindung verbunden sind.

29. Textilinformationsträger nach einem der Ansprüche 1 bis 23, **dadurch gekennzeichnet, dass** Anschlüsse der Antenne mit Anschlüssen des Chipmoduls durch eine Crimpverbindung verbunden sind.

30. Textilinformätionsträger nach einem der Ansprüche 1 bis 29, **dadurch gekennzeichnet, dass** das Chipmodul durch Stickgarn am textilen Träger fixiert ist.

31. Textilinformationsträger nach Anspruch 30, **dadurch gekennzeichnet, dass** das Stickgarn Anschlussfahnen des Chipmoduls umschlingt.

32. Textilinformationsträger nach Anspruch 30, **dadurch gekennzeichnet, dass** das Stickgarn Bohrungen in Anschlussfahnen des Chipmoduls durchgreift.

33. Textilinformationsträger nach einem der Ansprüche 1 bis 32, **dadurch gekennzeichnet, dass** das Chipmodul und die Anschlüsse des Chipmoduls mit der Antenne durch eine Schutzmasse als Globtop vergossen sind.

34. Textilinformationsträger nach einem der Ansprüche 1 bis 33, **dadurch gekennzeichnet, dass** das textile Detektierplättchen bei unterschiedlichen Größen des Textiletiketts oder der Textilware konstante Abmessungen aufweist, die nach der kleinsten technisch noch realisierbaren Größe des textilen Detektierplättchens bemessen sind.

35. Textilinformationsträger nach einem der Ansprüche 1 bis 34, **dadurch gekennzeichnet, dass** das textile Detektierplättchen bei unterschiedlichen Größen des Textiletiketts oder der Textilware einheitliche elektrische und elektronische Eigenschaften aufweist.

36. Textilinformationsträger nach einem der Ansprüche 1 bis 35, **dadurch gekennzeichnet, dass** das textile Detektierplättchen bei unterschiedlichen Größen des Textiletiketts oder der Textilware die gleiche Lesereichweite aufweist.

37. Verfahren zur Herstellung eines Textilinformationsträger mit den Merkmalen nach einem der Ansprüche 1 bis 35, **dadurch gekennzeichnet, dass** ein Textiletikett oder eine Textilware einerseits und ein textiles Detektierplättchen aus einem textilen Träger, in oder auf dem eine textile Antenne sowie ein mit der textilen Antenne verbundenes elektronisches Chipmodul angeordnet sind anderseits zuerst gesondert gefertigt und anschließend miteinander verbunden werden.

38. Verfahren nach Anspruch 37, **dadurch gekennzeichnet, dass** das textile Detektierplättchen aus einem textilen Träger hergestellt wird, auf den textilen Träger eine Antenne aufgestickt wird, anschließend ein Chipmodul mit seinen Anschlüssen über Anschlüssen der Antenne positioniert wird und dann die Anschlüsse des Chipmoduls mit den Anschlüssen der Antenne elektrisch leitend verbunden werden.

39. Verfahren nach Anspruch 37, **dadurch gekennzeichnet, dass** das textile Detektierplättchen aus einem textilen Träger hergestellt wird, auf den textilen Träger eine Antenne aufgestickt und dabei ein Chipmodul über Anschlüssen der Antenne positioniert und durch Stickgarn fixiert wird und gleichzeitig mit der Fixierung oder anschließend die Anschlüsse des Chipmoduls mit den Anschlüssen der Antenne elektrisch leitend verbunden werden.

40. Verfahren nach einem der Ansprüche 37 bis 39, **dadurch gekennzeichnet, dass** Textiletiketten oder Textilware unterschiedlicher Größe mit textilen Detektierplättchen konstanter Abmessungen verbunden werden, wobei die Abmessungen nach der kleinsten technisch noch realisierbaren Größe des textilen Detektierplättchens bemessen sind.
